# EUROPEAN PATENT APPLICATION

(11) **EP 4 817 890 A1**
(43) Date of publication of application: **07.10.2026**
(21) Application number: 26168572.1
(22) Date of filing: 27.03.2026
(51) Int. Cl.: B41M 5/00, B41M 1/26, B41M 7/00, B41M 1/30, B41M 5/30, B41M 5/42, B41M 5/44, B41M 5/323, B41M 5/327, B41M 5/333

(54) **IMAGE FORMING METHOD AND IMAGE FORMING APPARATUS**

(30) Priority: 02.04.2025 JP 2025061477
(71) Applicant: BROTHER KOGYO KABUSHIKI KAISHA, Aichi-ken 467-8561 (JP)
(72) Inventor: NISHIURA, Miki, Nagoya, 467-8562 (JP)
(74) Representative: Kuhnen & Wacker Patent- und Rechtsanwaltsbüro PartG mbB

(57) **Abstract**

An image forming method may include applying a liquid to a coating layer (M) of a medium (2) that includes a thermosensitive layer (L) and the coating layer (M), wherein the thermosensitive layer (L) includes a color developer (P) and a leuco dye (Q) that reacts with the color developer (P) at a first temperature or higher, the coating layer (M) includes a polymer (R), and the liquid includes a first organic solvent and resin particles; blowing a gas at a second temperature to a surface of the medium (2) where the liquid has been applied; and drying the medium (2) on which the liquid has been applied at a third temperature after the blowing. A solubility parameter of the first organic solvent may be 9.0 or more and less than 12.0. A following relationship may be satisfied: the second temperature < a minimum film-forming temperature of the resin particles in the liquid < the third temperature < the first temperature.

## Description

### TECHNICAL FIELD

The disclosure herein describes technology relating to an image forming method and an image forming apparatus.

### BACKGROUND ART

Japanese Patent Application Publication 2000-25331 describes an image forming method for forming an image on thermosensitive paper. The thermosensitive paper may be discolored by a liquid ejected to the thermosensitive paper penetrating through it.

### DESCRIPTION

The disclosure herein provides a novel technology for suppressing discoloration of a medium while improving the rub fastness of an image.

An image forming method is disclosed herein. The image forming method may include applying a liquid to a coating layer of a medium that comprises a thermosensitive layer and the coating layer disposed on the thermosensitive layer, wherein the thermosensitive layer may include a color developer and a leuco dye that reacts with the color developer at a first temperature or higher, the coating layer may include a polymer, and the liquid may include a first organic solvent and resin particles; blowing a gas at a second temperature to a surface of the medium where the liquid has been applied; and drying the medium on which the liquid has been applied at a third temperature after the blowing. A solubility parameter of the first organic solvent may be 9.0 or more and less than 12.0. A following relationship may be satisfied: the second temperature < a minimum film-forming temperature of the resin particles in the liquid < the third temperature < the first temperature.

The above-described liquid comprises the first organic solvent having the solubility parameter of 9.0 or more and less than 12.0 and resin particles. The resin particles in the liquid are swollen by the action of the first organic solvent, reducing distances between the resin particles. This allows for formation of a coating layer with the resin particles even when the temperature is lower than the minimum film-forming temperature of the resin particles. That is, the minimum film-forming temperature of the resin particles in the liquid is significantly lowered by the action of the first organic solvent compared to the minimum film-forming temperature of the resin particles alone. Thus, in the above-described image forming method, even when the medium is dried at the third temperature lower than the first temperature, the formation of the coating layer with the resin particles progresses, improving abrasion resistance of the resin coating layer. Further, the reaction between the color developer and the leuco dye is suppressed under the third temperature in the drying, suppressing discoloration of the medium. Further, in the above-described image forming method, the blowing facilitates evaporation of liquid-phase components, such as the first organic solvent, from the liquid adhering to the medium. A smaller residual amount of liquid-phase components on the medium means that less liquid-phase components penetrate through the medium. Thus, the leuco dye is suppressed from dissolving in the liquid-phase components, thereby suppressing discoloration of the medium that could be caused by the reaction between the color developer and the leuco dye.

The drying may be performed after the applying and the blowing have been repeated a plurality of times.

After the blowing and before the drying, a residual amount of the first organic solvent may be 0.01 mL/m² or more and 0.28 mL/m² or less.

The blowing may comprise blowing the gas from one direction to the surface of the medium (2) on which the liquid has been applied, and a blowing angle formed between the one direction and the surface may be greater than 0 degrees and less than 180 degrees.

The blowing angle may be 45 degrees or more and 135 degrees or less.

The liquid may further comprise a second organic solvent having a solubility parameter of 12.0 or more and 20.0 or less, after the blowing and before the drying, a residual amount of the first organic solvent may be 0.01 mL/m² or more and 0.15 mL/m² or less, and after the blowing and before the drying, a sum of the residual amount of the first organic solvent and a residual amount of the second organic solvent may be 0.01 mL/m² or more and 1.70 mL/m² or less.

The liquid may further comprise a color material.

The image forming method may further include selectively heating the medium (2) at the first temperature or higher after the drying.

An image forming apparatus is also disclosed herein. The image forming apparatus may include an applier configured to apply a liquid to a coating layer of a medium that comprises a thermosensitive layer and the coating layer disposed on the thermosensitive layer, wherein the thermosensitive layer may include a color developer and a leuco dye that reacts with the color developer at a first temperature or higher, the coating layer may include a polymer, and the liquid may include a first organic solvent and resin particles; a blower configured to blow a gas at a second temperature to a surface of the medium where the liquid has been applied; and a dryer configured to dry the medium to which the gas has been blown by the blower at a third temperature. A solubility parameter of the first organic solvent may be 9.0 or more and less than 12.0. A following relationship may be satisfied: the second temperature < a minimum film-forming temperature of the resin particles in the liquid < the third temperature < the first temperature.
FIG. 1 illustrates a configuration of an image forming apparatus.
FIG. 2 schematically illustrates a configuration of thermosensitive paper.

### (Configuration of Image Forming Apparatus 10)

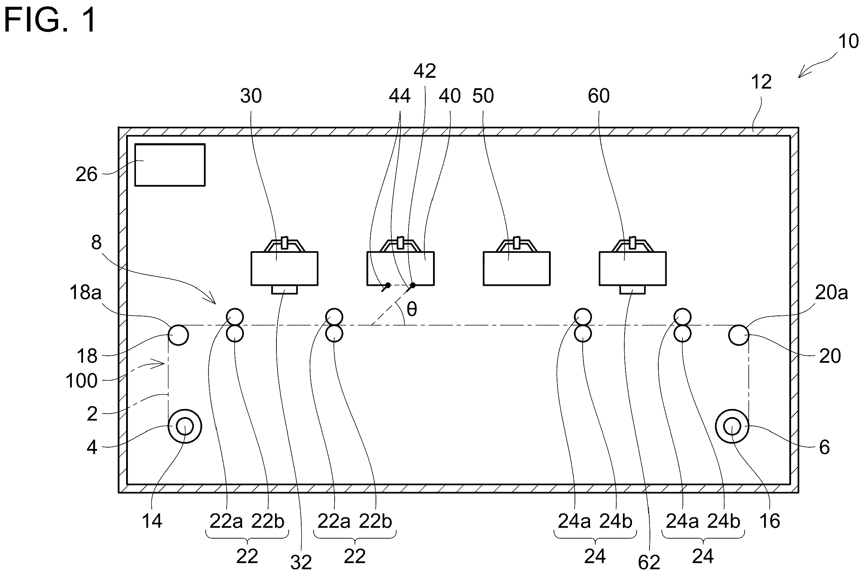

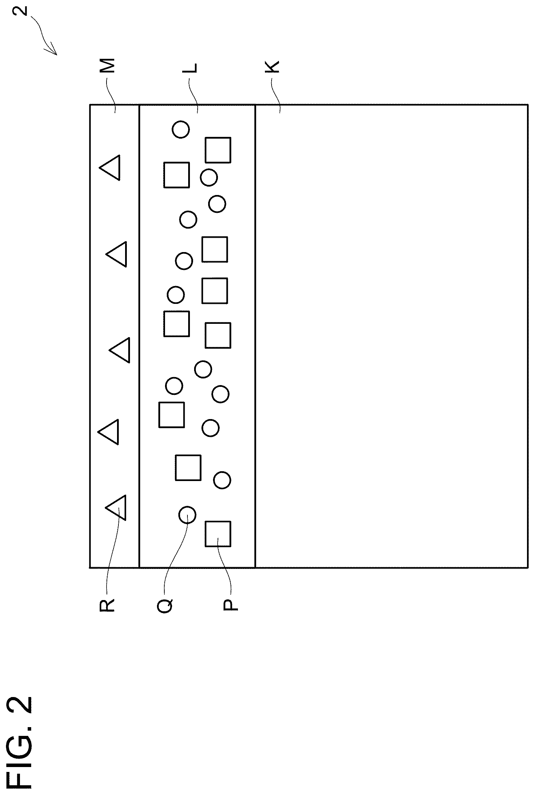

Referring to the drawings, an image forming apparatus 10 according to an embodiment is described. As illustrated in FIG. 1, the image forming apparatus 10 is configured to form images on thermosensitive paper 2. Specifically, the image forming apparatus 10 ejects ink toward a surface of the thermosensitive paper 2 according to an inkjet recording scheme to form images on the surface of the thermosensitive paper 2. As illustrated in FIG. 2, the thermosensitive paper 2 comprises a thermosensitive layer L and a coating layer M disposed on the thermosensitive layer L. In the disclosure herein, the surface of the thermosensitive paper 2 refers to the surface of the coating layer M. When the ink is ejected toward the surface of the thermosensitive paper 2, the ink adheres to the coating layer M of the thermosensitive paper 2.

The image forming apparatus 10 can also use a thermal scheme to selectively heat the thermosensitive paper 2, on which images have been already formed, to form additional images on the thermosensitive paper 2. The thermosensitive layer L comprises a color developer P and a leuco dye Q, and the leuco dye Q reacts with the color developer P at a first temperature or higher. Thus, images are formed on the thermosensitive paper 2 by selectively heating the thermosensitive layer L of the thermosensitive paper 2 at the first temperature or higher. Hereinafter, an image formed on the thermosensitive paper 2 with the ink may be termed "an ink image". Further, an image formed on the thermosensitive paper 2 by heating may be termed "an heating image". The image forming apparatus 10 is used in a state of being placed on a floor or a rack. However, in other embodiments, the image forming apparatus 10 may be used in a state of being placed on a desk.

As illustrated in FIG. 1, the image forming apparatus 10 comprises a housing 12, a first holder 14, a second holder 16, a first tensioner 18, a second tensioner 20, two first roller pairs 22, two second roller pairs 24, and a controller 26. The controller 26 is communicably connected to each unit/device of the image forming apparatus 10 and controls each unit/device of the image forming apparatus 10. Elements housed in the housing 12 are depicted in FIG. 1 for illustrative purposes, however, these elements need not necessarily be arranged at the positions as illustrated.

The first holder 14 supports a first roll 4 on which the thermosensitive paper 2 is wound in a roll. The thermosensitive paper 2 is an elongated sheet. The first holder 14 is rotated by a conveyor motor. When the first holder 14 rotates, the first roll 4 supported by the first holder 14 also rotates.

The first tensioner 18 is located above the first holder 14. The first tensioner 18 comprises an outer surface 18a configured to contact the thermosensitive paper 2. After drawn from the first roll 4, the thermosensitive paper 2 is curved along the outer surface 18a and fed forward.

Each of the two first roller pairs 22 comprises a first conveyor roller 22a and a first pinch roller 22b. Contact between the first conveyor roller 22a and the first pinch roller 22b forms a nip 8. In an up-down direction, the nips 8 are located at substantially the same position as the upper end of the outer surface 18a of the first tensioner 18. The two first roller pairs 22 are rotated by the conveyor motor. The two first roller pairs 22 rotate while nipping the thermosensitive paper 2 to feed the thermosensitive paper 2 from the first tensioner 18. The number and arrangement of the first roller pairs 22 are not particularly limited.

Each of the two second roller pairs 24 comprises a second conveyor roller 24a and a second pinch roller 24b. Contact between the second conveyor roller 24a and the second pinch roller 24b forms a nip 8. In the up-down direction, the nips 8 are located at substantially the same position as the upper end of an outer surface 20a of the second tensioner 20. The two second roller pairs 24 are rotated by the conveyor motor. The two second roller pairs 24 rotate while nipping the thermosensitive paper 2 to feed the thermosensitive paper 2 toward the second tensioner 20. The number and arrangement of the second roller pairs 24 are not particularly limited.

The second tensioner 20 is located above the second holder 16. The second tensioner 20 comprises the outer surface 20a configured to contact the thermosensitive paper 2. After passing through the second roller pairs 24, the thermosensitive paper 2 is curved along the outer surface 20a and fed downward.

The second holder 16 supports a second roll 6. The second holder 16 is rotated by the conveyor motor. When the second holder 16 rotates, the second roll 6 supported by the second holder 16 also rotates, thereby winding up the thermosensitive paper 2 on which images have been formed in a roll.

A conveyance path 100 along which the thermosensitive paper 2 is fed is formed between the first holder 14 and the second holder 16. Images are recorded on the thermosensitive paper 2 while the thermosensitive paper 2 is fed along the conveyance path 100. The controller 26 controls the units/devices such as the first roller pairs 22 and the second roller pairs 24. Thus, the controller 26 can feed the thermosensitive paper 2 from the first holder 14 toward the second holder 16 along the conveyance path 100, that is, from the upstream end toward the downstream end of the conveyance path 100. The controller 26 can also feed the thermosensitive paper 2 in the opposite direction from the second holder 16 toward the first holder 14 along the conveyance path 100, that is, from the downstream end toward the upstream end of the conveyance path 100.

The image forming apparatus 10 comprises an applier 30, a blower 40, a dryer 50, and a heater 60. The applier 30, the blower 40, the dryer 50, and the heater 60 are arranged in this order from the upstream end toward the downstream end of the conveyance path 100.

The applier 30 is located above the conveyance path 100. The applier 30 comprises a plurality of nozzles 32. The controller 26 controls piezoelectric elements and other elements corresponding to the nozzles 32. The controller 26 controls the piezoelectric elements and the other elements to selectively eject ink through the nozzles 32 to the outside. Thus, ink images are formed on the surface of the thermosensitive paper 2 by selectively ejecting the ink through the nozzles 32 toward the surface of the thermosensitive paper 2. The specific configuration of the applier 30 is not particularly limited.

The blower 40 can blow a gas at a second temperature. The blower 40 is, for example, a dryer or a heat gun. The controller 26 controls the blower 40 to blow the gas at the second temperature toward the surface of the thermosensitive paper 2, so that liquid-phase components contained in the ink on the surface of the thermosensitive paper 2 can be evaporated. Since the thermosensitive paper 2 has a relatively small thickness, a portion of the thermosensitive paper 2 exposed to the gas is heated up to the second temperature across the entire thickness of the thermosensitive paper 2.

The blower 40 can blow the gas from one direction to the surface of the thermosensitive paper 2. A blowing angle θ formed between the one direction and the surface of the thermosensitive paper 2 is more than 0 degrees and less than 180 degrees. The blower 40 comprises a gas outlet 42 and two guide members 44. The gas outlet 42 is an opening through which the gas is discharged to the outside of the blower 40. Each of the two guide members 44 has a plate-shape member. One of the guide members 44 is located at an end of the gas outlet 42 and the other guide member 44 is located at another end of the gas outlet 42. Thus, a slit is formed between the two guide members 44, and the gas flows through the slit. One end of each guide member 44 is pivotably supported at the gas outlet 42. The controller 26 can pivot the guide members 44 relative to the gas outlet to change angles of the guide members 44 relative to the surface of the thermosensitive paper 2. The controller 26 can also adjust the guide members 44 so that the two guide members 44 are angled at the same angle relative to the surface of the thermosensitive paper 2 to blow the gas through the gas outlet 42 to the outside. The gas from the gas outlet 42 flows through the slit formed between the two guide members 44 from the one ends toward the opposite ends of the two guide members 44. Thus, the gas from the gas outlet 42 is blown from one direction to the surface of the thermosensitive paper 2 at the same angle as the angle of the two guide members 44 relative to the surface of the thermosensitive paper 2. That is, the angle of the two guide members 44 relative to the surface of the thermosensitive paper 2 is equal to the blowing angle θ. Therefore, the blowing angle θ can be changed by changing the angle of the two guide members 44 relative to the surface of the thermosensitive paper 2. As apparent from the above, blowing the gas from one direction to the surface of the thermosensitive paper 2 includes, for example, angling the two guide members 44 at the same angle relative to the surface of the thermosensitive paper 2 to blow the gas through the gas outlet 42. The blowing angle θ is, for example, an angle formed between the surface of the thermosensitive paper 2 and a plane on which one of the two guide members 44 angled at the same angle relative to the surface of the thermosensitive paper 2 lies.

The specific configuration of the blower 40 is not particularly limited. For example, the angle of the two guide members 44 relative to the surface of the thermosensitive paper 2 may be changed by an operator. In another example, when one of the guide members 44 is pivoted relative to the gas outlet 42, the other guide member 44 may be also pivoted relative to the gas outlet 42 at the same angle. In another example, the blower 40 may comprise three or more guide members 44. In this case, the controller 26 may adjust the three or more guide members 44 so that the three or more guide members 44 are angled at the same angle relative to the surface of the thermosensitive paper 2 to blow the gas through the gas outlet 42 to the outside. In this case as well, the gas is blown from one direction to the surface of the thermosensitive paper 2. In another example, the blower 40 may be configured to adjust a position relative to the thermosensitive paper 2 along the conveyance path 100.

The dryer 50 can dry the thermosensitive paper 2 at a third temperature. The dryer 50 is, for example, a drying device, a heat gun, an oven, or an IR heater. The controller 26 controls the dryer 50 to dry the ink on the thermosensitive paper 2. The dryer 50 may blow a gas at the third temperature toward the surface of the thermosensitive paper 2 or heat the thermosensitive paper 2 at the third temperature without blowing a gas. The specific configuration of the dryer 50 is not particularly limited.

The heater 60 is located above the conveyance path 100. The heater 60 comprises a plurality of heat-generating elements 62. The heat-generating elements 62 are aligned on the lower surface of the heater 60 along the direction vertical to the sheet on which FIG. 1 is drawn. That is, the direction along which the heat-generating elements 62 are aligned is perpendicular to the feed direction of the thermosensitive paper 2 along the conveyance path 100. The controller 26 selectively causes the heat-generating elements 62 to generate heat to selectively heat the thermosensitive layer L of the thermosensitive paper 2 to form heating images on the thermosensitive paper 2. The specific configuration of the heater 60 is not particularly limited.

### (Thermosensitive Paper)

As illustrated in FIG. 2, the thermosensitive paper 2 comprises a substrate K, the thermosensitive layer L, and the coating layer M. The thermosensitive layer L is disposed on the substrate K, and the coating layer M is disposed on the thermosensitive layer L. Thus, the surface of the thermosensitive paper 2 is formed by the coating layer M. The thermosensitive paper 2 may further comprise, between the substrate K and the thermosensitive layer L, an undercoat layer for improving their adhesion, thermal insulation, and smoothness.

The substrate K supports the thermosensitive layer L. When a heating image is formed on the thermosensitive layer L, not only the thermosensitive layer L but also the substrate K is heated. Therefore, the substrate K is formed from a material having mechanical strength sufficient to withstand heating without causing handling problems. Examples of the material of the substrate K may include, for example, various types of paper and plastic films. Examples of the various types of paper may include, for example, various types of plain paper, treated paper, and synthetic paper, and more specifically, high-quality paper, coated paper, art paper, cast-coated paper, paperboard, paper impregnated with resin emulsions or synthetic rubber latexes, and synthetic resin-treated paper. Examples of the plastic films may include, for example, polyolefin-based resin films, rigid polyvinyl chloride films, polyester-based resin films, polystyrene films, polycarbonate films, polyacrylonitrile films, and polymethyl methacrylate films. These plastic films may be transparent films or white, opaque films incorporating a white pigment and/or filler. One of the above-listed papers and films may be solely used as the substrate K, or a stack of two or more of the above-listed papers and films may be used as the substrate K.

As described above, the thermosensitive layer L comprises the color developer P and the leuco dye Q, and the leuco dye Q reacts with the color developer P at the first temperature or higher. The first temperature is, for example, 90°C. The thermosensitive layer L may further comprise a binder, a sensitizer, and a storage stabilizer. Additionally or alternatively, the thermosensitive layer L may further comprise an additive such as a pigment, wax, and defoaming agent, and/or a filler for optionally coloring the thermosensitive layer L.

The leuco dye Q may be a suitable leuco dye selected from conventionally known colorless or lightly colored leuco dyes. Examples of the leuco dye Q may include, for example, (1) triarylmethane-based compounds such as 3,3-bis(p-dimethylaminophenyl)-6-dimethylaminophthalide; 3-(p-dimethylaminophenyl)-3-(2-phenyl-3-indolyl)phthalide; 3-(p-dimethylaminophenyl)-3-(1,2-dimethyl-3-indolyl)phthalide; 3,3-bis(9-ethyl-3-carbazolyl)-5-dimethylaminophthalide; and 3,3-bis(2-phenyl-3-indolyl)-5-dimethylaminophthalide; (2) diphenylmethane-based compounds such as 4,4-bis(dimethylamino)benzhydryl benzyl ether and N-(2,4,5-trichlorophenyl)leucoauramine; (3) xanthene-based compounds such as 3-dibutylamino-6-methyl-7-bromofluoran; rhodamine-β-anilino-lactam; 3-(N-methyl-N-cyclohexylamino)-6-methyl-7-anilinofluoran; 3-diethylamino-7-octylaminofluoran; 3-diethylamino-7-(2-chloroanilino)fluoran; 3-diethylamino-6-methyl-7-anilinofluoran; 3-diethylamino-6-methyl-7-(2,4-dimethylanilino)fluoran; 3-diethylamino-7-dibenzylaminofluoran; 3-diethylamino-6-chloro-7-(β-ethoxyethylamino)fluoran; 3-diethylamino-6-chloro-7-(γ-chloropropylamino)fluoran; 3-(N-ethyl-N-isoamylamino)-6-methyl-7-anilinofluoran; 3-(N-ethyl-N-ethoxyethylamino)-6-methyl-7-anilinofluoran; 3-(N-ethyl-N-tetrahydrofurylamino)-6-methyl-7-anilinofluoran; 3-(N-ethyl-N-triylamino)-6-methyl-7-anilinofluoran; 3-dibutylamino-6-methyl-7-anilinofluoran; 3-dibutylamino-7-(2-chloroanilino)fluoran; 3-dipentylamino-6-methyl-7-anilinofluoran; 3-piperidino-6-methyl-7-anilinofluoran; and 3-(4-anilino)anilino-6-methyl-7-chlorofluoran; (4) thiazine-based compounds such as benzoyl leucomethylene blue and p-nitrobenzoyl leucomethylene blue; (5) spiro-based compounds such as 3-methyl spirodinaphthopyran; 3-ethyl spirodinaphthopyran; 3-benzyl spirodinaphthopyran; and 3-methyl-naphtho(3-methoxybenzo)spiropyran; (6) others such as 3,5',6-tris(dimethylamino)-spiro[9H-fluorene-9,1'(3'H)-isobenzo[furan]]-3'-one; and 1,1-bis[2-(4-dimethylaminophenyl)-2-(4-methoxyphenyl)ethenyl]-4,5,6,7-tetrachloro(3H)isobenzofuran-3-one. One of the above-listed compounds may be solely used as the leuco dye Q, or a combination of two or more of the above-listed compounds may be used as the leuco dye Q.

The solubility parameter of the leuco dye Q is not particularly limited. In the disclosure herein, a solubility parameter may be termed an SP value. The lower limit of the SP value of the leuco dye Q is, for example, 7.0 or more, 7.5 or more, 8.0 or more, or 8.2 or more. The upper limit of the SP value is, for example, 9.5 or less, 9.2 or less, 9.0 or less, or 8.8 or less. Any upper and lower limits above can be combined as desired to set an SP value range. The SP value range is, for example, from 7.0 or more to 9.5 or less, from 7.5 or more to 9.2 or less, from 8.0 or more to 9.0 or less, or from 8.2 or more to 8.8 or less. The SP value is calculated, for example, based on Fedors method (Polymer Engineering and Science, 1974, Vol.14, No.2, P147 to 154). The unit for the SP value is (cal/cm³)^{0.5}. The leuco dye Q content is not particularly limited. The leuco dye Q content is, for example, 10.0 wt% or more and 35.0 wt% or less based on the total amount of solid components in the thermosensitive layer L.

Examples of the color developer P may include, for example, phenols such as p-octylphenol; p-tert-butylphenol; p-phenylphenol; p-hydroxyacetophenone; α-naphthol; β-naphthol; p-tert-octylcatechol; 2,2'-dihydroxybiphenyl; bisphenol A; 1,1-bis(p-hydroxyphenyl)butane; 2,2-bis(4-hydroxyphenyl)heptane; 2,2-bis(3-methyl-4-hydroxyphenyl)propane; 2,2-bis(3,5-dimethyl-4-hydroxyphenyl)propane; 2,2-bis(3,5-dichloro-4-hydroxyphenyl)propane; bis(4-hydroxyphenyl)sulfone; bis(3-allyl-4-hydroxyphenyl)sulfone; bis(3,4-dihydroxyphenyl)sulfone; 2,4'-dihydroxyphenylsulfone; 1,1-bis(4-hydroxyphenyl)cyclohexane; bis(4-hydroxyphenyl)ether; bis[2-(4-hydroxyphenylthio)ethoxy]methane; 4-(4-isopropoxybenzenesulfonyl)phenol; dimethyl 4-hydroxyphthalate; butyl bis(4-hydroxyphenyl)acetate; benzyl p-hydroxybenzoate; and 3,5-di-tert-butylsalicylic acid; organic carboxylic acids such as benzoic acids; metals such as zinc salicylates; and anilide-based derivatives such as 2,4-dihydroxy-N-2'-methoxybenzanilide. One of the above-listed components may be used solely as the color developer P, or a combination of two or more of the above-listed components may be used as the color developer P.

The thermosensitive layer L can be formed, for example, by applying a coating liquid to the substrate K by a publicly known method, wherein the coating liquid is prepared by mixing water, the color developer P, the leuco dye Q, and other additive(s) if needed.

The coating layer M improves glossiness and resistance properties such as heat resistance and resistance to plasticizer. The coating layer M may be termed a protection layer because it prevents moisture, oil, and/or organic solvent from adhering to the thermosensitive layer L so that the leuco dye Q and the color developer P do not dissolve therein and develop color. The coating layer M comprises a polymer R. Examples of the polymer R may include, for example, acrylic resins, methacrylic resins, urethane resins, polypropylene, polyethylene, polystyrene, and polyethylene terephthalate. One of these components may be used solely as the polymer R, or a combination of two or more of these components may be used as the polymer R.

The SP value of the polymer R is not particularly limited. The lower limit of the SP value is, for example, 8.0 or more, 8.5 or more, or 9.0 or more. The upper limit of the SP value is, for example, 11.0 or less, 10.5 or less, or 10.0 or less. Any upper and lower limits above can be combined as desired to set an SP value range. The SP value range is, for example, from 8.0 or more to 11.0 or less, from 8.5 or more to 10.5 or less, or from 9.0 or more to 10.0 or less. The SP value of the polymer R is calculated based on the monomers constituting the polymer R.

### (Ink)

The ink comprises resin particles, a color material, an organic solvent, and water. The ink is an aqueous ink in which the resin particles, the color material, and the organic solvent are dissolved or dispersed in water. The ink may not comprise the color material.

### (Resin Particles)

The resin particles comprise, for example, at least one of methacrylic acid and acrylic acid as monomers. The resin particles may further comprise, for example, styrene and/or vinyl chloride as monomers. The resin particles may be incorporated, for example, in an emulsion. The emulsion comprises, for example, the resin particles and a dispersion medium such as water. The resin particles are not dissolved in the dispersion medium but are dispersed in the dispersion medium while having particle diameters within a predetermined range. Examples of the resin particles may include, for example, acrylic resins, maleic-ester resins, vinyl acetate resins, carbonate-based resins, polycarbonate resins, styrene-based resins, ethylene-based resins, polyethylene-based resins, propylene-based resins, polypropylene-based resins, urethane-based resins, polyurethane-based resins, polyester-based resins, and copolymers of these resins. One of these resins may be used solely as the resin particles, or a combination of two or more of these resins may be used as the resin particles.

The minimum film-forming temperature (MFT) of the resin particles is not particularly limited. The lower limit of the minimum film-forming temperature is, for example, 40°C or more, 50°C or more, or 60°C or more. The upper limit of the minimum film-forming temperature is, for example, 100°C or less, 90°C or less, or 80°C or less. Any lower and upper limits above can be combined to set a minimum film-forming temperature range. The minimum film-forming temperature range is, for example, from 40°C or more to 100°C or less, from 50°C or more to 90°C or less, or from 60°C or more to 80°C or less.

A commercially available emulsion may be used as the emulsion. Examples of commercially available emulsion include, for example, SUPERFLEX^{®} 870 (MFT: 70°C) (manufactured by DKS Co., Ltd.), and HIROS-X^{®} KE-1062 (MFT: 55°C) and HIROS-X^{®} QE-1042 (MFT: 45°C) (both available from SEIKO PMC CORPORATION.

The average particle diameter of the resin particles is, for example, in the range of 30 nm or more to 200 nm or less. The average particle diameter of the resin particles can be measured as an arithmetic average diameter using a dynamic light scattering particle size distribution analyzer LB-550 available from HORIBA, Ltd.

A content range of resin particle solid components relative to the total amount of the ink is not particularly limited. The range is, for example, from 0.1 wt% or more to 30.0 wt% or less, from 0.5 wt% or more to 20.0 wt% or less, or from 1.0 wt% or more to 15.0 wt% or less.

### (Color Material)

Examples of the color material may include, for example, resin-dispersed pigments and self-dispersible pigments. The resin-dispersed pigment are pigments in which a resin dispersant is adsorbed onto the pigment surface to impart dispersion stability in solvent to the pigment. The resin dispersant contains, for example, at least one of methacrylic acid and acrylic acid as monomers. Examples of the resin dispersant may include, for example, hydrophobic monomer units such as styrene, styrene derivatives, vinyl naphthalene, vinyl naphthalene derivatives, and aliphatic alcohol esters of α, β-ethylenically unsaturated carboxylic acids, or block copolymers, graft copolymers, or random copolymers comprised of two or more monomers selected from acrylic acid, acrylic acid derivatives, maleic acid, maleic acid derivatives, itaconic acid, itaconic acid derivatives, fumaric acid, and fumaric acid derivatives, or salts thereof. In an exemplary method for dispersing a pigment with a resin dispersant, the pigment may be dispersed using a dispersion apparatus. The dispersion apparatus used for pigment dispersion is not particularly limited so long as it is a conventional disperser. Examples of the dispersion apparatus may include, for example, ball mills, roll mills, and sand mills.

The self-dispersible pigments are, for example, pigments that are dispersible in water without the use of a dispersant because at least one type of hydrophilic functional group or a salt thereof is introduced into the pigment particles by chemical bonding, either directly or via another group. Examples of the hydrophilic functional group may include, for example, carbonyl group, hydroxyl group, carboxyl group, sulfonic group, and phosphoric group. Examples of the pigments may include, for example, carbon black, inorganic pigments, and organic pigments. Examples of the carbon black may include, for example, furnace black, lamp black, acetylene black, and channel black. Examples of the inorganic pigments may include, for example, titanium dioxide, iron oxide-based inorganic pigments, and carbon-black-based inorganic pigments. Examples of the organic pigments may include, for example, azo pigments, polycyclic pigments, dye-lake pigments, nitro pigments, nitroso pigments, and aniline black, daylight fluorescent pigments. Examples of the azo pigments may include, for example, azo lakes, insoluble azo pigments, condensed azo pigments, and chelate azo pigments. Examples of the polycyclic pigments may include, for example, phthalocyanine pigments, perylene and perinone pigments, anthraquinone pigments, quinacridone pigments, dioxazine pigments, thioindigo pigments, isoindolinone pigments, and quinophthalone pigments. Examples of the dye-lake pigments may include, for example, basic dye-type lake pigments and acid dye-type lake pigments. One of the above-listed components may be solely used as the color material, or a combination of two or more of the above-listed components may be used as the color material.

The pigment solid components content relative to the total amount of the ink is not particularly limited. The solid components content can be appropriately determined, for example, according to the desired optical density or chroma. A range of the solid content is, for example, from 0.1 wt% or more to 20.0 wt% or less, or from 1.0 wt% or more to 15.0 wt% or less. The pigment solid components content refers to the weight of the pigment only and does not include the weight of resin particles. That is, the pigment solid components content is expressed on an active-ingredient basis.

The organic solvent comprises a first organic solvent and a second organic solvent. The first organic solvent has an SP value of 9.0 or more and less than 12.0. In the ink comprising the first organic solvent having an SP value within this range, the resin particles are easily swollen by the action of the first organic solvent. When the resin particles are swollen, the distances between the resin particles are decreased, which enables formation of a film with the resin particles even when the temperature is lower than the minimum film-forming temperature of the resin particles. Thus, the film-forming temperature of the resin particles in the ink is significantly lowered compared to the film-forming temperature of the resin particles alone. The first organic solvent is not particularly limited and any solvent can be used so long as it has an SP value of 9.0 or more and less than 12.0. The lower limit of the SP value of the first organic solvent is, for example, 9.0 or more, 9.5 or more, or 10.0 or more. The upper limit of the SP value is, for example, less than 12.0, 11.5, or less, or 11.0 or less. Any upper and lower limits above can be combined as desired to set an SP value range. The SP value range is, for example, from 9.0 or more to less than 12.0, from 9.5 or more to 11.5 or less, or from 9.0 or more to 11.0 or less. Examples of the first organic solvent may include, for example, 2-pyrrolidone, triethylene glycol monomethyl ether, dipropylene glycol monomethyl ether, propylene glycol monopropyl ether, 1-butoxy-2-propanol, tripropylene glycol monomethyl ether, tripropylene glycol monobutyl ether, diethylene glycol monobutyl ether, and 3-methoxy-3-methylbutanol. One of the above-listed components may be solely used as the first organic solvent, or a combination of two or more of these components may be used as the first organic solvent.

The second organic solvent has an SP value of 12.0 or more and 20.0 or less. Since the viscosity of water is lower than the viscosities of the organic solvents, evaporation of water from the ink may increase the viscosity of the ink. Excessively increased viscosity of the ink may make it difficult to eject the ink through the nozzles 32 of the applier 30. In view of this, the second organic solvent having an SP value within the range above contains a relatively high proportion of hydrophilic groups. Since hydrophilic groups tend to form hydrogen bonds, the hydrophilic groups in the second organic solvent are expected to form hydrogen bonds with water in the ink. The hydrogen bonds between the hydrophilic groups of the second organic solvent and water in the ink make it harder for the water to evaporate. Thus, the ink comprising the second organic solvent suppresses water evaporation by the action of the second organic solvent. This suppresses an increase in the viscosity of ink and thus suppresses the aforementioned ink ejection failure. The second organic solvent is not particularly limited and any solvent can be used so long as its SP value is 12.0 or more and 20.0 or less. The lower limit of the SP value of the second organic solvent is, for example, 12.0 or more, 13.0 or more, or 14.0 or more. The upper limit of the SP value is, for example, 20.0 or less, 19.0 or less, or 18.0 or less. Any lower and upper limits above can be combined as desired to set an SP value range. The SP value range is, for example, from 12.0 or more to 20.0 or less, 13.0 or more to 19.0 or less, or 14.0 or more to 18.0 or less. Examples of the second organic solvent may include, for example, glycerin; 1,3-propanediol; propylene glycol; tripropylene glycol; dipropylene glycol; 1,2-hexanediol; diethylene glycol; triethylene glycol; polyethylene glycol 200; 1,2-butanediol; 1,3-butanediol; and 1,2-pentanediol. One of the above-listed components may be solely used as the second organic solvent, or a combination of two or more of these components may be used as the second organic solvent. Alternatively, the organic solvent may not comprise the second organic solvent.

The first organic solvent content relative to the total amount of the ink is not particularly limited. A range of the first organic solvent content is, for example, from 0.1 wt% or more to 10.0 wt% or less, 1.0 wt% or more to 8.0 wt% or less, or 2.0 wt% or more to 6.0 wt% or less. If the first organic solvent content relative to the total amount of the ink is relatively high, the film-forming temperature of the resin particles in the ink may be lowered close to the room temperature and a film may be formed with the resin particles at the room temperature. This may make it difficult, for example, to eject the ink through the nozzles 32 of the applier 30. The above ranges of the first organic solvent content relative to the total amount of the ink allow for a moderate lowering of the film-forming temperature of the resin particles in the ink.

The second organic solvent content relative to the total amount of the ink is not particularly limited. A range of the second organic solvent content is, for example, from 5.0 wt% or more to 40.0 wt% or less, from 10.0 wt% or more to 38.0 wt% or less, or from 15.0 wt% or more to 35.0 wt% or less.

### (Water)

Water may, for example, ion-exchange water or pure water. The water content relative to the total amount of the ink is not particularly limited. A range of the water content is, for example, from 15.0 wt% or more to 95.0 wt% or less, or from 25.0 wt% or more to 90.0 wt% or less. The water content may be, for example, the remainder excluding the other components.

### (Other Components)

The ink may further comprise publicly known additive(s). Examples of the additive(s) may include, for example, surfactants, pH adjusters, and viscosity modifiers. Examples of the surfactants may include, for example, cationic surfactants, anionic surfactants, nonionic surfactants, and silicone-based surfactants. A commercially available surfactant may be used. Examples of the commercially available surfactant may include, for example, OLFINE^{®} E1010, OLFINE^{®} E1006, OLFINE^{®} E1004, SILFACE^{®} SAG503A, and SILFACE^{®} SAG002 (all available from Nisshin Chemical Industry Co., Ltd.). The surfactant content relative to the total amount of the ink is not particularly limited. A range of the surfactant content is, for example, from 0.1 wt% or more to 5.0 wt% or less, or from 0.2 wt% or more to 4.0 wt% or less.

The ink can be prepared, for example, by uniformly mixing the resin particles, the color material, the organic solvent, water, and other additive(s) if needed, by a publicly known method and then removing undissolved solids through a filter.

### (Image Forming Method)

Now, an image forming method with the image forming apparatus 10 is described. The image forming method comprises a feeding step, an application step, a blowing step, a drying step, and a heating step. The conveying step, the application step, the blowing step, the drying step, and the heating step are sequentially performed in this order. The controller 26 starts each step, for example, in response to an instruction to form an image being input to the image forming apparatus 10 from an external. When the above instruction is input, the controller 26 controls the units such as the first roller pairs 22 and the second roller pairs 24 to feed the thermosensitive paper 2 along the conveyance path 100.

### (Application Step)

In the application step, the controller 26 applies the ink onto the coating layer M of the thermosensitive paper 2. The controller 26 controls the piezoelectric elements corresponding to the nozzles 32 to selectively eject the ink through the nozzles 32 toward the coating layer M of the thermosensitive paper 2 moving along the conveyance path 100. An ink image is thereby formed on the surface of the thermosensitive paper 2.

### (Blowing Step)

In the blowing step, the controller 26 causes the gas to be blown toward the surface of the thermosensitive paper 2 at the second temperature. The second temperature is lower than the minimum film-forming temperature of the resin particles in the ink. The second temperature is, for example, 25°C. The minimum film-forming temperature of the resin particles in the ink is, for example, 55°C. The controller 26 controls the blower 40 to evaporate the liquid-phase components from the ink on the surface of the thermosensitive paper 2.

After the blowing step, the liquid-phase components in the ink still remain on the surface of the thermosensitive paper 2. The liquid-phase components here include the organic solvent. The residual amount of the first organic solvent after the blowing step and before the drying step is not particularly limited. The lower limit of this residual amount is, for example, 0.001 mL/m² or more, 0.002 mL/m² or more, 0.050 mL/m² or more, 0.010 mL/m² or more, or 0.015 mL/m² or more. The upper limit of the residual amount is, for example, 0.42 mL/m² or less, 0.35 mL/m² or less, 0.28 mL/m² or less, 0.20 mL/m² or less, or 0.15 mL/m² or less. Any lower and upper limits can be combined as desired to set a residual amount range. The residual amount range is, for example, from 0.001 mL/m² or more to 0.42 mL/m² or less, from 0.002 mL/m² or more to 0.35 mL/m² or less, from 0.050 mL/m² or more to 0.28 mL/m² or less, from 0.010 mL/m² or more to 0.20 mL/m² or less, or from 0.015 mL/m² or more to 0.15 mL/m² or less. From the viewpoint of reducing the liquid-phase components of the ink that penetrate into the thermosensitive paper 2, the residual amount may be 0.01 mL/m² or more and 0.28 mL/m² or less. From the same viewpoint, it is more desirable that the residual amount is 0.01 mL/m² or more and 0.15 mL/m² or less.

The residual amount of the second organic solvent after the blowing step and before the drying step is not particularly limited. The lower limit of this residual amount is, for example, 0.10 mL/m² or more, 0.50 mL/m² or more, 0.80 mL/m² or more, or 1.00 mL/m² or more. The upper limit of the residual amount is, for example, 2.40 mL/m² or less, 2.00 mL/m² or less, 1.60 mL/m² or less, or 1.40 mL/m² or less. Any lower and upper limits can be combined as desired to set a residual amount range. The residual amount range is, for example, from 0.10 mL/m² or more to 2.40 mL/m² or less, from 0.50 mL/m² or more to 2.00 mL/m² or less, from 0.80 mL/m² or more to 1.60 mL/m² or less, or from 1.00 mL/m² or more to 1.40 mL/m² or less. The sum of the residual amount of the first organic solvent and the residual amount of the second organic solvent after the blowing step and before the drying step is not particularly limited. The lower limit of the sum is, for example, 0.001 mL/m² or more, 0.002 mL/m² or more, 0.050 mL/m² or more, 0.010 mL/m² or more, or 0.015 mL/m² or more. The upper limit of the sum is, for example, 2.40 mL/m² or less, 2.20 mL/m² or less, 2.00 mL/m² or less, 1.70 mL/m² or less, or 1.50 mL/m² or less. Any lower and upper limits above can be combined as desired to set a sum range. The sum range is, for example, from 0.001 mL/m² or more to 2.40 mL/m² or less, from 0.002 mL/m² or more to 2.20 mL/m² or less, from 0.050 mL/m² or more to 2.00 mL/m² or less, from 0.01 mL/m² or more to 1.70 mL/m² or less, or from 0.015 mL/m² or more to 1.50 mL/m² or less. From the viewpoint of reducing the liquid-phase components of the ink that penetrate into the thermosensitive paper 2, the sum range may be from 0.01 mL/m² or more to 1.70 mL/m² or less.

In the period from the end of the blowing step to the start of the drying step, no gas is delivered to the surface of the thermosensitive paper 2. Thus, the evaporation rate of the liquid-phase components from the ink on the surface of the thermosensitive paper 2 is relatively slow during that period. If the period from the end of the blowing step to the start of the drying step is relatively short, it is expected that the liquid-phase components on the thermosensitive paper 2 hardly evaporate. In this case, "the residual amount of the first organic solvent after the blowing step and before the drying step" remains substantially unchanged regardless of the length of time that has elapsed from the end of the blowing step. In contrast, if the period from the end of the blowing step to the start of the drying step is relatively long, the liquid-phase components on the thermosensitive paper 2 evaporate significantly. In this case, "the residual amount of the first organic solvent after the blowing step and before the drying step" gradually decreases over time after the end of the blowing step. Therefore, "the residual amount of the first organic solvent after the blowing step and before the drying step" mentioned above may refer to, for example, the residual amount of the first organic solvent at a time immediately after the end of the blowing step within the period between the blowing step and the drying step. The same applies to the second organic solvent.

The controller 26 adjusts the two guide members 44 such that they are angled at the same angle relative to the surface of the thermosensitive paper 2 to blow the gas through the gas outlet 42 to the outside. Thus, the controller 26 blows the gas from one direction to the surface of the thermosensitive paper 2 at the same angle as the angle of the two guide members 44 relative to the thermosensitive paper 2. The blowing angle θ is formed between the one direction and the surface of the thermosensitive paper 2. The controller 26 can change the blowing angle θ by changing the angle of the two guide members 44 relative to the surface of the thermosensitive paper 2. For this, the controller 26 may displace the blower 40. The blowing angle θ is not particularly limited. A range of the blowing angle θ may be, for example, from more than 0 degrees to less than 180 degrees or from 45 degrees or more to 135 degrees or less. From the viewpoint of diffusing the gas along the surface of the thermosensitive paper 2 after it has reached the surface, the blowing angle θ may be more than 0 degrees and less than 180 degrees. The blowing angle θ in the range of 45 degrees or more and 135 degrees or less allows for a favorable diffusion of the gas along the surface of the thermosensitive paper 2 after the gas has reached the surface. In this embodiment, when the surface of the thermosensitive paper 2 is viewed in the direction vertical thereto, the above-mentioned one direction is parallel to the feed direction of the thermosensitive paper 2 and opposite to the feed direction. However, when the surface of the thermosensitive paper 2 is viewed in the direction perpendicular thereto, the one direction may be any direction relative to the feed direction of the thermosensitive paper 2. For example, when the surface of the thermosensitive paper 2 is viewed in the direction perpendicular thereto, the one direction may be perpendicular to the feed direction of the thermosensitive paper 2, or it may be parallel to the feed direction and be the same direction as the feed direction.

### (Drying Step)

In the drying step, the controller 26 dries the ink-adhering thermosensitive paper 2 at the third temperature. The third temperature is higher than the minimum film-forming temperature of the resin particles in the ink and lower than the first temperature. The third temperature is, for example, 60°C. The controller 26 controls the dryer 50 to dry the ink on the surface of the thermosensitive paper 2.

Generally, heating the ink-adhering thermosensitive paper 2 to a temperature higher than the minimum film-forming temperature of the resin particles causes the resin particles in the ink to transition into a liquid state or rubbery state. Coolong the thermosensitive paper 2 subsequently to a temperature lower than the minimum film-forming temperature causes the liquid-phase or rubbery resin particles to solidify. A resin layer is thereby formed on the coating layer M of the thermosensitive paper 2. Since the third temperature is higher than the minimum film-forming temperature of the resin particles in the ink, the resin layer is formed with the resin particles in the drying step.

### (Heating Step)

In the heating step, the controller 26 selectively heats the thermosensitive paper 2 at the first temperature or higher. The controller 26 selectively causes the heat-generating elements 62 of the heater 60 to generate heat to selectively heat the thermosensitive layer L of the thermosensitive paper 2 at the first temperature or higher. Thereby, the leuco dye Q reacts with the color developer P in the thermosensitive layer L and develops a color, thereby additionally forming a heating image on the thermosensitive paper 2.

In this embodiment, the ink comprises the first organic solvent having an SP value in the range of 9.0 or more and less than 12.0 and the resin particles. In this ink, the resin particles are swollen by the action of the first organic solvent and distances between the resin particles are decreased. This allows for formation of a film with the resin particles even when the temperature is lower than the minimum film-forming temperature of the resin particles. That is, the minimum film-forming temperature of the resin particles in the ink is significantly lowered by the action of the first organic solvent compared to the minimum film-forming temperature of the resin particles alone. Thus, in the above-described image forming method, even when the thermosensitive paper 2 is dried at the third temperature lower than the first temperature, formation of a layer with the resin particles progresses, which improves the abrasion resistance of the resin layer. Further, the reaction between the color developer P and the leuco dye Q under the third temperature in the drying step is suppressed, suppressing discoloration of the medium. Further, in the above-described image forming method, the blowing step facilitates evaporation of the liquid-phase components, such as the first organic solvent, from the ink on the thermosensitive paper 2. A smaller residual amount of the liquid-phase components on the thermosensitive paper 2 means that less liquid-phase components penetrate through the thermosensitive paper 2. Thus, the leuco dye Q is suppressed from dissolving in the liquid-phase components, thereby suppressing the discoloration of the thermosensitive paper 2 that could be caused by the reaction between the color developer P and the leuco dye Q.

In this embodiment, the drying step and the heating step are performed after the application step and the blowing step have been repeated a plurality of times. For example, the controller 26 feeds the thermosensitive paper 2 from the upstream end toward the downstream end of the conveyance path 100 to perform the application step and the blowing step on a predetermined portion of the thermosensitive paper 2. Subsequently, the controller 26 feeds the thermosensitive paper 2 in the opposite direction from the downstream end toward the upstream end of the conveyance path 100 to move the predetermined portion of the thermosensitive paper 2 to under the applier 30. The controller 26 then performs the application step and the blowing step again on the predetermined portion of the thermosensitive paper 2. The repetition of the application step and the blowing step reduces an amount of the ink applied to the thermosensitive paper 2 per application step. This means that less amount of the first organic solvent penetrates through the thermosensitive paper 2 per application step. Thus, the leuco dye Q is suppressed from dissolving in the liquid comprising the first organic solvent, thereby suppressing the discoloration of the thermosensitive paper 2 that could be caused by the reaction between the color developer P and the leuco dye Q.

The above-described image forming method can be used, for example, to form images on labels attached to products. Information that does not change depending on manufacturing conditions, such as the product name and/or manufacturer, are recorded as ink images on the thermosensitive paper 2 according to an inkjet recording scheme. In contrast, information that changes depending on manufacturing conditions, such as lot numbers and/or manufacture dates, are recorded as heating images on the thermosensitive paper 2 according to a thermal scheme. Thus, the information that does not change depending on manufacturing conditions may be pre-recorded as ink images on the thermosensitive paper 2, and then the information that changes depending on manufacturing conditions may be recorded as heating images on the thermosensitive paper 2 during the manufacture of products.

### [EXAMPLES]

Now, the ink is described more specifically using examples and comparative examples. It should be noted that the invention is not limited to these examples.

### (Preparation of Ink)

Inks 1 to 4 were prepared by mixing the components shown in Table 1. For each ink, the numerical values in the sections for respective components in Table 1 indicate the contents of the respective components relative to the total amount of the ink in wt%. The contents of the resin particles and the color material are expressed on a solids basis. The minimum film-forming temperature of the resin particles in the inks shown in Table 1 was measured using the minimum film-forming temperature tester MFFTB-90 available from Rhopoint Instruments Ltd.

**Table 1**

| | Material Name | Ink 1 | Ink 2 | Ink 3 | Ink 4 |
|---|---|---|---|---|---|
| Water | Purified Water (SP value:26.7) | Remainder | Remainder | Remainder | Remainder |
| First Organic Solvent | Diethylene Glycol Monobutyl Ether (SP value:10.5) | 5.0 | - | - | - |
| | 3-Methoxy-3-Methylbutanol (SP value:10.7) | - | 4.0 | 4.0 | - |
| Second Organic Solvent | Propylene glycol (SP value:15.9) | 30.0 | 25.0 | 25.0 | 25.0 |
| Surfactant | Silicone-based Surfactant | 0.5 | 0.5 | 0.5 | 0.5 |
| Resin Particles | Acrylic resin (Minimum Film-forming Temperature: 78°C) | 5.0 | 5.0 | - | 5.0 |
| Color Material | Pigment Dispersion (Yellow, Resin-dispersed) | 5.0 | 5.0 | 5.0 | 5.0 |
| Total | | 100 | 100 | 100 | 100 |
| Minimum Film-forming Temperature of Resin Particles in Ink [°C] | | 55 | 58 | - | 70 |

The degree of discoloration of the thermosensitive paper 2 and the rub fastness of a portion of the thermosensitive paper 2 on which an ink image has been formed (hereinafter referred to as "ink-image formed portion") were evaluated according tot he methods below. For the following evaluations, thermal syntehic paper available from LINTEC Corporation was used as the thermosensitive paper 2. The first temperature, which is the reaction temperature between the leuco dye Q and the color developer P in the thermosensitive layer L of the thermosensitive paper 2, was 90°C.

### (Preparation of Evaluation Samples)

For each example, an evaluation sample was prepared according to the conditions shown in Tables 2 to 4, by applying the ink to the coating layer M of the thermosensitive paper 2, blowing the gas there to and drying the ink, and then leaving it for 24 hours at the room temperature. Each of the blowing angles shown in Tables 2 to 4 is an angle formed between the surface of the thermosensitive paper 2 and a plane on which one of the guide members 44 angled at the same angle relative to the surface of the thermosensitive paper 2 expands. In the drying step, the inks on the thermosensitive paper 2 were dried by blowing a gas thereto at the third temperature. Each of the residual amounts of first organic solvent after blowing step and before drying step shown in Tables 2 to 4 was calculated as follows. First, the ink was applied to an impermeable substrate according to the conditions shown in Table 2 to 4, the gas was blown thereto, and then the residual amount of the ink was measured. That is, the residual amount of the ink was measured at a time immediately after the end of the blowing step within the period between the end of the blowing step and the start of the drying step. The residual rate of the ink was calculated from the amount of ink applied in the application step and the residual amount of ink. Then, the residual amount of first organic solvent after blowing step and before drying step was calculated by multiplying the amount of first organic solvent in the ink applied in the application step by the calculated residual rate of the ink. If the application step and the blowing step are repeated a plurality of times, the residual amount of first organic solvent after blowing step and before drying step was calculated as the sum of the values obtained by multiplying each of the amounts of first organic solvent in the ink applied in each application step by the calculated residual rate of the ink. The same applies to the second organic solvent.

### (Evaluation of Thermosensitive Paper Discoloration)

For the evaluation samples of examples, their L*a*b* values of the image-formed surfaces were measured using the spectrophotometer eXact available from X-Rite, Inc.

Light source: D₅₀, Viewing angle: 2°, Status: T, Illumination condition at measurement: M0 (no filter), Backing: PANTONE white backing, Illumination/observation geometry: 45/0.

Then, color differences ΔE00 according to CIEDE2000 were calculated in accordance with JIS Z8781-6:2017 to evaluate the degree of discoloration of the thermosensitive paper 2 according to the criteria below. The evaluation results and the calculated color differences ΔE00 are shown in Tables 2 to 4.
AA: $ΔE 00 \leq 1.5$
A: $1.5 < ΔE 00 \leq 3.0$
B: $3.0 < ΔE 00 \leq 5.0$
C: $5.0 < ΔE 00 \leq 7.0$
D: $ΔE 00 > 7.0$

### (Evaluation of Rub Fastness)

For the evaluation samples of examples, their optical density (OD) values were measured using the spectrophotometer eXact available from X-Rite, Inc.

Light source: D₅₀, Viewing angle: 2°, Status: T

Then, for the evaluation samples of examples, their image-formed portions were rubbed 10 times under a load of 200 g by the probe of the Gakushin-type rub fastness tester AB-301 available from TESTER SANGYO Co., Ltd. The OD values of the evaluation samples of examples were measured after the rubbing by the above-mentioned spectrophotometer to evaluate the rub fastness of the ink-image formed portions according to the criteria below. The evaluation results are shown in Tables 2 to 4.
A: Difference in OD value before and after rubbing < 0.5
B: Difference in OD value before and after rubbing ≥ 0.5

**Table 2**

| | | Example 1 | Example 2 | Example 3 | Example 4 | Example 5 | Example 6 | Example 7 |
|---|---|---|---|---|---|---|---|---|
| Ink | | 1 | 1 | 1 | 1 | 1 | 1 | 2 |
| Number of Repetitions of Application Step and Blowing Step [times] | | 1 | 2 | 3 | 3 | 3 | 3 | 1 |
| Application Step | Amount of Ink Applied in First Application Step [mL/m²] | 8.9 | 4.5 | 2.9 | 2.9 | 2.9 | 2.9 | 8.9 |
| | Amount of Ink Applied in Secong Application Step [mL/m²] | - | 4.5 | 2.9 | 2.9 | 2.9 | 2.9 | - |
| | Amount of Ink Applied in Third Application Step [mL/m²] | - | - | 3.0 | 3.0 | 3.0 | 3.0 | - |
| Blowing Step | Presence/Absence of Gas Blowing | Present | Present | Present | Present | Present | Present | Present |
| | Second Temprature [°C] | 25 | 25 | 25 | 25 | 25 | 25 | 25 |
| | Blowing Angle [degrees] | 180 | 180 | 180 | 45 | 90 | 90 | 180 |
| | Blowing Time [seconds] | 120 | 120 | 120 | 120 | 120 | 300 | 60 |
| Drying Step | Third Temprature [°C] | 60 | 60 | 60 | 60 | 60 | 60 | 60 |
| | Drying Time [seconds] | 60 | 60 | 60 | 60 | 60 | 60 | 60 |
| Residual Amount of First Organic Solvent after Blowing Step and before Drying Step [mL/m²] | | 0.34 | 0.31 | 0.28 | 0.21 | 0.21 | 0.13 | 0.12 |
| Residual Amount of Second Organic Solvent after Blowing Step and before Drying Step [mL/m²] | | 1.59 | 1.31 | 1.10 | 1.10 | 1.10 | 0.55 | 1.95 |
| Sum of Residual Amount of First Organic Solvent and Residual Amount of Second Organic Solvent after Blowing Step and before Drying Step[mL/m²] | | 1.94 | 1.62 | 1.38 | 1.31 | 1.31 | 0.68 | 2.07 |
| Results | Discoloration of Thermosensitive Paper | C | C | B | A | A | AA | B |
| | | 5.8 | 5.2 | 4.1 | 3.0 | 1.8 | 1.3 | 4.1 |
| | Rub Fastness | A | A | A | A | A | A | A |

**Table 3**

| | | Example 8 | Example 9 | Example 10 | Example 11 | Example 12 | Example 13 |
|---|---|---|---|---|---|---|---|
| Ink | | 2 | 2 | 2 | 2 | 2 | 2 |
| Number of Repetitions of Application Step and Blowing Step [times] | | 3 | 3 | 3 | 3 | 3 | 3 |
| Application Step | Amount of Ink Applied in First Application Step [mL/m²] | 2.9 | 2.9 | 2.9 | 2.9 | 2.9 | 2.9 |
| | Amount of Ink Applied in Secong Application Step [mL/m²] | 2.9 | 2.9 | 2.9 | 2.9 | 2.9 | 2.9 |
| | Amount of Ink Applied in Third Application Step [mL/m²] | 3.0 | 3.0 | 3.0 | 3.0 | 3.0 | 3.0 |
| Blowing Step | Presence/Absence of Gas Blowing | Present | Present | Present | Present | Present | Present |
| | Second Temprature [°C] | 25 | 25 | 25 | 25 | 35 | 45 |
| | Blowing Angle [degrees] | 180 | 45 | 90 | 90 | 90 | 90 |
| | Blowing Time [seconds] | 60 | 60 | 60 | 45 | 60 | 60 |
| Drying Step | Third Temprature [°C] | 60 | 60 | 60 | 60 | 60 | 60 |
| | Drying Time [seconds] | 60 | 60 | 60 | 60 | 60 | 60 |
| Residual Amount of First Organic Solvent after Blowing Step and before Drying Step [mL/m²] | | 0.06 | 0.01 | 0.01 | 0.08 | 0.01 | 0.01 |
| Residual Amount of Second Organic Solvent after Blowing Step and before Drying Step [mL/m²] | | 2.11 | 1.54 | 1.54 | 1.71 | 1.47 | 1.37 |
| Sum of Residual Amount of First Organic Solvent and Residual Amount of Second Organic Solvent after Blowing Step and before Drying Step[mL/m²] | | 2.17 | 1.54 | 1.54 | 1.79 | 1.48 | 1.38 |
| Results | Discoloration of Thermosensitive Paper | B | AA | AA | A | AA | AA |
| | | 3.2 | 0.6 | 0.5 | 2.6 | 1.0 | 1.5 |
| | Rub Fastness | A | A | A | A | A | A |

**Table 4**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Ink | | 1 | 1 | 1 | 1 | 1 | 1 | 2 | 3 | 4 |
| Number of Repetitions of Application Step and Blowing Step [times] | | 1 | 3 | 3 | 3 | 3 | 3 | 1 | 1 | 1 |
| Application Step | Amount of Ink Applied in First Application Step [mL/m²] | 8.9 | 2.9 | 2.9 | 2.9 | 2.9 | 2.9 | 8.9 | 8.9 | 8.9 |
| | Amount of Ink Applied in Secong Application Step [mL/m²] | - | 2.9 | 2.9 | 2.9 | 2.9 | 2.9 | - | - | - |
| | Amount of Ink Applied in Third Application Step [mL/m²] | - | 3.0 | 3.0 | 3.0 | 3.0 | 3.0 | - | - | - |
| Blowing Step | Presence/Absence of Gas Blowing | - | - | Absent | Present | Present | Present | - | Present | Present |
| | Second Temprature [°C] | - | - | (Room Temprature) | 25 | 25 | 60 | - | 25 | 25 |
| | Blowing Angle [degrees] | - | - | - | 45 | 45 | 45 | - | 45 | 45 |
| | Blowing Time [seconds] | - | - | (Standing Time [seconds]: 120) | 120 | 120 | 120 | - | 60 | 60 |
| Drying Step | Third Temprature [°C] | 60 | 60 | 60 | - | 40 | 60 | 60 | 60 | 80 |
| | Drying Time [seconds] | 60 | 60 | 60 | - | 60 | 60 | 60 | 60 | 60 |
| Residual Amount of First Organic Solvent after Blowing Step and before Drying Step [mL/m²] | | 0.43 | 0.43 | 0.43 | 0.21 | 0.21 | 0.14 | 0.37 | 0.03 | 0.00 |
| Residual Amount of Second Organic Solvent after Blowing Step and before Drying Step [mL/m²] | | 2.46 | 2.46 | 2.46 | 1.10 | 1.10 | 0.99 | 2.05 | 1.64 | 1.64 |
| Sum of Residual Amount of First Organic Solvent and Residual Amount of Second Organic Solvent after Blowing Step and before Drying Step [mL/m²] | | 2.89 | 2.89 | 2.89 | 1.31 | 1.31 | 1.13 | 2.43 | 1.67 | 1.64 |
| Results | Discoloration of Thermosensitive Paper | D | D | D | A | A | D | D | AA | AA |
| | | 7.6 | 7.1 | 14.2 | 1.8 | 1.7 | 7.8 | 11.9 | 0.6 | 0.7 |
| | Rub Fastness | A | A | A | B | B | A | A | B | B |

As shown in Tables 2 and 3, the samples of examples 1 to 13 yielded favorable results in the discoloration evaluation and the rub fastness evaluation.

In contrast, as shown in Table 4, the sample of comparative example 1 showed a larger degree of discoloration of the thermosensitive paper 2 than the sample of example 1. That is, it has been confirmed that the reaction between the leuco dye Q and the color developer P had progressed in comparative example 1 compared to example 1. Unlike the sample of example 1, the sample of comparative example 1 was not subjected to the blowing step. Thus, the liquid-phase components in the ink are less likely to evaporate from the ink on the thermosensitive paper 2. The liquid-phase components here include the first organic solvent and the second organic solvent. These liquid-phase components on the surface of the thermosensitive paper 2 are likely to penetrate through the coating layer M by the action of the first organic solvent. Further, the first organic solvent often has an SP value close to the SP value of typical leuco dye Q. The closeness between these solubility parameter values may cause the leuco dye Q to dissolve in the liquid-phase components by the action of the first organic solvent. Therefore, it is considered that the discoloration of the thermosensitive paper 2 progressed due to the reaction between the color developer P and the leuco dye Q resulting from the dissolution of the leuco dye Q in the liquid-phase components. Similarly, the samples of comparative examples 2 and 3 showed larger degrees of discoloration of the thermosensitive paper 2 than the sample of example 3. Unlike the sample of example 3, the sample of comparative example 2 was not subjected to the blowing step. The sample of comparative example 3 was left at the room temperature instead of the blowing step as in the case with comparative example 3. The same difference between the sample of example 1 and the sample of comparative example 1 was confirmed in the cases involving different inks. That is, the ink 2 was used for the samples of example 7 and comparative example 7, instead of the ink 1 used for the samples of example 1 and comparative example 1, and the sample of comparative example 7 which was not subjected to the blowing step showed a larger degree of discoloration of the thermosensitive paper 2 than the sample of example 7.

The samples of comparative examples 4 and 5 yielded inferior results in the rub fastness evaluation compared to the sample of example 4. Unlike the sample of example 4, the sample of comparative example 4 was not subjected to the drying. Thus, in comparative example 4, the thermosensitive paper 2 was not heated to a temperature higher than the minimum film-forming temperature of the resin particles in the ink. In comparative example 5, the third temperature in the drying step was lower than that in example 4. That is, the third temperature was lower than the minimum film-forming temperature of the resin particles in the ink. In this case, the thermosensitive paper 2 was not heated to a temperature higher than the minimum film-forming temperature of the resin particles in the ink even when the heating step was performed thereon. Therefore, formation of a film with the resin particles did not progress in the samples of comparative examples 4 and 5, resulting in the inferior results in the rub fastness evaluation. From the above, it has been found that the rub fastness can be improved by setting the third temperature higher than the minimum film-forming temperature of the resin particles in an ink.

The sample of comparative example 6 showed a larger degree of discoloration of the thermosensitive paper 2 than the sample of example 4. In comparative example 6, the second temperature in the blowing step was higher than that in example 4. That is, the second temperature was higher than the minimum film-forming temperature of the resin particles in the ink. This high second temperature in the blowing step caused the liquid-phase components in the ink to penetrate through the coating layer M of the thermosensitive paper 2 in a larger amount by the action of the first organic solvent. From the above, it has been found that discoloration of the thermosensitive paper 2 can be suppressed by setting the second temperature lower than the minimum film-forming temperature of the resin particles in an ink.

The sample of comparative example 8 yielded an inferior result in the rub fastness evaluation compared to the sample of example 7. The ink used in comparative example 8 was different from the ink used in example 7. Specifically, the ink 3 used in comparative example 8 had the same composition as the ink 2 used in example 7, except that the former did not comprise the resin particles. In comparative example 8, a film was not formed with resin particles even when the dying step was performed, resulting in the inferior result in the rub fastness evaluation.

The sample of comparative example 9 yielded an inferior result in the rub fastness evaluation compared to the sample of example 7. The ink used in comparative example 9 was different from the ink used in example 7. The ink 4 used in comparative example 9 had the same composition as the ink 2 used in example 7, except that the former did not comprise the first organic solvent. The minimum film-forming temperature of the resin particles in the ink 4 was 70°C and close to 78°C which is the minimum film-forming temperature of the resin particles alone. It was difficult for the resin particles in the ink 4 to be swollen since the ink 4 did not comprise the first organic solvent. Thus, formation of a film with the resin particles did not progress well even when the thermosensitive paper 2 was dried in the drying step at the temperature of 60°C which is higher than the minimum film-forming temperature of the resin particles in the ink 4, resulting in the inferior result in the rub fastness evaluation. In contrast, the minimum film-forming temperature of the resin particles in the ink 2 was 55°C and significantly lower than the minimum film-forming temperature of the resin particles alone. In the ink 2 comprising the first organic solvent, the resin particles were swollen by the action of the first organic solvent and distances between the resin particles were thereby decreased. Thus, formation of a resin film with the resin particles progressed even at a temperature lower than the minimum film-forming temperature of the resin particles. Additionally, the reaction between the color developer P and the leuco dye Q caused by the heating at the third temperature in the drying step can be suppressed, thereby suppressing the discoloration of the thermosensitive paper 2. It has been also confirmed that in the ink 1 comprising the resin particles and the first organic solvent, the minimum film-forming temperature of the resin particles was significantly lowered.

Now, the examples are compared. Examples 1 to 3 are different in the number of repetitions of the application step and the blowing step. Accordingly, examples 1 to 3 are different in the amount of ink applied to the thermosensitive paper 2 per application step. More specifically, in example 1, the application step and the blowing step were performed once and the amount of ink applied to the thermosensitive paper 2 per application step was 8.9 mL/m²; in example 2, the application step and the blowing step were repeated twice and the amount of ink applied to the thermosensitive paper 2 per application step was 4.5 mL/m²; and in example 3, the application step and the blowing step were repeated three times and the amount of ink applied to the thermosensitive paper 2 per application step was 2.9 mL/m². As shown in examples 1 to 3, it has been confirmed that the degree of discoloration of the thermosensitive paper 2 tends to decrease as the number of repetitions of the application step and the blowing step increases. Less number of repetitions means that a larger amount of ink is applied to the thermosensitive paper 2 per application step. When the liquid-phase components in the larger amount of ink penetrate through the coating layer M of the thermosensitive paper 2, the leuco dye Q easily dissolves in the liquid-phase components. From the above, it has been found that discoloration of the thermosensitive paper 2 can be suppressed by repeating the application step and the blowing step a plurality of times.

Further, as shown in examples 1 to 3, the residual amount of the first organic solvent after the blowing step and before the drying step decreases as the number of repetitions of the application step and the blowing step increases. Hereinafter, the residual amount of the first organic solvent after the blowing step and before the drying step may be simply termed "the residual amount of the first organic solvent". The same applies to the residual amount of the second organic solvent after the blowing step and before the drying step. In example 1, the residual amount of the first organic solvent was 0.34 mL/m². In example 2, the residual amount of the first organic solvent was 0.31 mL/m². In contrast, in example 3, the residual amount of the first organic solvent was 0.28 mL/m². Then, the sample of example 3 showed a smaller degree of discoloration of the thermosensitive paper 2 than the samples of examples 1 and 2. A larger residual amount of the first organic solvent facilitates penetration of the liquid-phase components in the ink through the coating layer M of the thermosensitive paper 2 by the action of the first organic solvent, leading to easier dissolution of the leuco dye Q in the liquid-phase components. From the above, it has been found that discoloration of the thermosensitive paper 2 can be suppressed by reducing the residual amount of the first organic solvent after the blowing step and before the drying step to within a range from 0.01 mL/m² or more to 0.28 mL/m² or less.

The same results as those of examples 1 to 3 were yielded with a different ink. In examples 7 and 8, the ink 2 was used instead of the ink 1 used in examples 1 to 3. In example 8, the number of repetitions of the application step and the blowing step was larger and the residual amount of the first organic solvent was smaller compared to example 7. Then, the sample of example 8 showed a smaller degree of discoloration of the thermosensitive paper 2 than the sample of example 7.

Examples 3 to 5 are different in the blowing angle θ in the blowing step. In example 3, the blowing angle θ was 180 degrees; in example 4, the blowing angle θ was 45 degrees; and in example 5, the blowing angle θ was 90 degrees. As shown in examples 3 to 5, the degree of discoloration of the thermosensitive paper 2 decreases as the blowing angle θ is closer to 90 degrees. Especially, the samples of examples 4 and 5 showed smaller degrees of discoloration of the thermosensitive paper 2 than the sample of example 3. With the blowing angle θ of 180 degrees, the gas blown to the thermosensitive paper 2 flows along the surface of the thermosensitive paper 2 without diffusing along the surface of the thermosensitive paper 2. Thus, the liquid-phase components in the ink on the surface of the thermosensitive paper 2 are less likely to evaporate. In contrast, with the blowing angle θ of more than 0 degrees and less than 180 degrees, the gas blown to the thermosensitive paper 2 diffuses along the surface of the thermosensitive paper 2, which facilitates evaporation of the liquid-phase components from the ink on the surface of the thermosensitive paper 2. Therefore, an amount of the liquid-phase components that penetrates through the coating layer M of the thermosensitive paper 2 is reduced and the leuco dye Q is less likely to dissolve in the liquid-phase components, resulting in the smaller degrees of discoloration of the thermosensitive paper 2. From the above, it has been found that discoloration of the thermosensitive paper 2 can be suppressed with the blowing angle θ of more than 0 degrees and less than 180 degrees. Further, it is expected that discoloration of the thermosensitive paper 2 can be further suppressed with the blowing angle θ of 45 degrees or more and 135 degrees or less.

The same results as those of examples 3 to 5 were yielded with a different ink. In examples 8 to 10, the ink 2 was used instead of the ink 1 used in examples 3 to 5. As shown in examples 8 to 10, the degree of discoloration of the thermosensitive paper 2 decreases as the blowing angle θ is closer to 90 degrees. The samples of examples 9 and 10, for which the blowing step was performed with the blowing angle θ of 45 degrees and the blowing angle θ of 90 degrees, respectively, showed smaller degrees of discoloration of the thermosensitive paper 2 than the sample of example 8 for which the blowing step was performed with the blowing angle θ of 180 degrees.

Among the samples of examples 1 to 13, the samples of examples 6, 9, 10, 12, and 13 especially yielded favorable results in the discoloration evaluation and the rub fastness evaluation. In each of examples 6, 9, 10, 12, and 13, the residual amount of the first organic solvent after the blowing step and before the drying step was 0.01 mL/m² or more and 0.15 mL/m² or less, and the sum of the residual amount of the first organic solvent and the residual amount of the second organic solvent after the blowing step and before the drying step was 0.01 mL/m² or more and 1.70 mL/m² or less. The inventor of the present invention has confirmed that discoloration of the thermosensitive paper 2 can be favorably suppressed and improved rub fastness can be achieved by adjusting the blowing step conditions to satisfy the above relations. The blowing step conditions here include, for example, the blowing angle θ, second temperature, and blowing time. However, as mentioned above, the second temperature needs to be lower than the minimum film-forming temperature of the resin particles in an ink. The examples are individually discussed below.

Examples 5 and 6 are different in the blowing time in the blowing step. Accordingly, examples 5 and 6 are different in the residual amount of the first organic solvent and the residual amount of the second organic solvent. The sample of example 6 showed a smaller degree of discoloration of the thermosensitive paper 2 than the sample of example 5. With shorter blowing time, a smaller amount of the liquid-phase components evaporates from the ink on the thermosensitive paper 2 and the first and second organic solvents remain in larger amounts. Then, a larger amount of the liquid-phase components in the ink penetrates through the coating layer M of the thermosensitive paper 2 by the action of the first organic solvent, facilitating dissolution of the leuco dye Q in the liquid-phase components. The second organic solvent can penetrate through the coating layer M of the thermosensitive paper 2, along with the first organic solvent. Thus, a larger amount of the liquid-phase components (especially the first organic solvent) reaches the thermosensitive layer L, facilitating dissolution of the leuco dye Q in the liquid-phase components. When the residual amount of the first organic solvent and the residual amount of the second organic solvent are small after the blowing step and the drying step, the residual amount of the first organic solvent and the residual amount of the second organic solvent are also small after the drying step. This forms a rigid resin layer having improved abrasion resistance on the thermosensitive paper 2

The same results as those of examples 5 and 6 were yielded with a different ink. In examples 10 and 11, the ink 2 was used instead of the ink 1 used in examples 5 and 6. In example 10, the blowing time was longer and the residual amounts of the first and second organic solvents were smaller compared to example 11. Then, the sample of example 10 showed a smaller degree of discoloration of the thermosensitive paper 2 than the sample of example 11.

Examples 10 and 12 to 13 are different in the second temperature in the blowing step. In examples 10 and 12 to 13, the application step and the blowing step were repeated three times and the blowing angle θ was 90 degrees. Thus, in each of these examples, the residual amount of the first organic solvent and the residual amount of the second organic solvent were small. Therefore, discoloration of the thermosensitive paper 2 was favorably suppressed in examples 10 and 12 to 13.

Example 7 is different from example 1 in the type of ink and blowing time. Despite the blowing time in example 7 being shorter than that in example 1, the sample of example 7 showed a smaller degree of discoloration of the thermosensitive paper 2 than the sample of example 1. This is considered to be attributable to the difference between the first organic solvents contained in their inks. The ink 1 used in example 1 comprised diethylene glycol monobutyl ether as the first organic solvent, while the ink 2 used in example 7 comprised 3-methoxy-3-methylbutan-1-ol as the first organic solvent. Further, the molecular weight of diethylene glycol monobutyl ether in example 1 was greater than the molecular weight of 3-methoxy-3-methylbutan-1-ol in example 7. Generally, organic solvents having larger molecular weights are less likely to evaporate and less likely to penetrate through the coating layer M of the thermosensitive paper 2. As shown in examples 1 and 7, since the first organic solvent having the larger molecular weight is less likely to evaporate, the residual amount of the first organic solvent was larger. Then, in example 1, the effect of the larger residual amount of the first organic solvent predominated over the reduced penetrability of the first organic solvent, resulting in an increase in the amount of the first organic solvent that penetrated through the coating layer M of the thermosensitive paper 2. From the above, discoloration of the thermosensitive paper 2 can be suppressed by using an organic solvent having moderately small molecular weight as the first organic solvent in an ink.

The same results as those of examples 1 and 7 were yielded with different number of repetitions of the application step and the blowing step. The molecular weight of the first organic solvent in the ink 2 used in example 8 was smaller than the molecular weight of the first organic solvent in the ink 1 used in example 3. Then, despite the blowing time in example 8 being shorter than that in example 3, the residual amount of the first organic solvent was smaller in example 8 and the sample of example 8 showed a smaller degree of discoloration of the thermosensitive paper 2.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents. Some specific examples of potential alternatives, modifications, or variations in the described invention are provided below.

### (Modification 1)

In the above-described embodiment, the image forming apparatus 10 may not comprise the configurations for feeding the thermosensitive paper 2, such as the two first roller pairs 22 and the two second roller pairs 24. In this modification, the image forming apparatus 10 may comprise a surface on which the thermosensitive paper 2 is placed, and the units such as the applier 30 may be configured to be movable relative to the surface. In other words, in the image forming method, the steps such as the application step may be performed on the thermosensitive paper 2 placed on the surface instead of performing the application step on the thermosensitive paper 2 moving along the conveyance path 100.

### (Modification 2)

In the above-described embodiment, the image forming apparatus 10 may comprise multiple sets of the applier 30 and the blower 40. That is, the controller 26 may repeat the application step and the blowing step a plurality of times while the thermosensitive paper 2 is fed in the direction from the first holder 14 toward the second holder 16, without feeding the thermosensitive paper 2 in the direction from the second holder 16 toward the first holder 14.

### (Modification 3)

In the above-described embodiment, the application step and the blowing step may not be repeated a plurality of times in the image forming method. That is, the image forming method may comprise the application step, the blowing step, the drying step, and the heating step, and these steps may be sequentially performed in this order.

### (Modification 4)

In the above-described embodiment, the blower 40 may not comprise the guide members 44. For example, in other embodiments, the gas outlet 42 may be cylindrical in shape and have an opening through which the gas is blown out from the blower 40. In these embodiments, the blowing angle θ can be changed by changing the angle of the opening of the gas outlet 42 relative to the surface of the thermosensitive paper 2. This blowing angle θ may be, for example, the angle formed between the surface of the thermosensitive paper 2 and a straight line extending through the center of the opening of the gas outlet 42. The straight line extending through the center of the opening of the gas outlet 42 is parallel to the one direction along which the blower 40 blow the gas to the surface of the thermosensitive paper 2.

### (Modification 5)

In the above-described embodiment, the gas may not be blown from the one direction to the surface of the thermosensitive paper 2 in the blowing step. For example, the blower 40 may comprise multiple gas outlets 42, and the gas may be blown from multiple directions to the surface of the thermosensitive paper 2 in the blowing step.

### (Modification 6)

In the above-described embodiment, the image forming apparatus 10 may not comprise the heater 60. That is, the image forming method may not comprise the heating step of selectively heating the thermosensitive paper 2 at the first temperature after the drying step. Alternatively, the heater 60 may be a unit of another image forming apparatus. That is, after an ink image has been formed on the thermosensitive paper 2 in the image forming apparatus 10, a heating image may be additionally formed on the thermosensitive paper 2 on which the ink image has been already formed in the other image forming apparatus. In this case, after the thermosensitive paper 2 on which an ink image had been already formed in the image forming apparatus 10 has been attached to a product, a heating image may be additionally formed on the thermosensitive paper 2 attached to the product in the other image forming apparatus.

## Claims

1. An image forming method comprising:
applying a liquid to a coating layer (M) of a medium (2) that comprises a thermosensitive layer (L) and the coating layer (M) disposed on the thermosensitive layer (L), wherein the thermosensitive layer (L) comprises a color developer (P) and a leuco dye (Q) that reacts with the color developer (P) at a first temperature or higher, the coating layer (M) comprises a polymer (R), and the liquid comprises a first organic solvent and resin particles;
blowing a gas at a second temperature to a surface of the medium (2) where the liquid has been applied; and
drying the medium (2) on which the liquid has been applied at a third temperature after the blowing,
wherein
a solubility parameter of the first organic solvent is 9.0 or more and less than 12.0, and
a following relationship is satisfied: the second temperature < a minimum film-forming temperature of the resin particles in the liquid < the third temperature < the first temperature.

2. The image forming method according to claim 1, wherein the drying is performed after the applying and the blowing have been repeated a plurality of times.

3. The image forming method according to claim 1 or 2, wherein after the blowing and before the drying, a residual amount of the first organic solvent is 0.01 mL/m² or more and 0.28 mL/m² or less.

4. The image forming method according to any one of claims 1 to 3, wherein
the blowing comprises blowing the gas from one direction to the surface of the medium (2) on which the liquid has been applied, and
a blowing angle formed between the one direction and the surface is greater than 0 degrees and less than 180 degrees.

5. The image forming method according to claim 4, wherein the blowing angle is 45 degrees or more and 135 degrees or less.

6. The image forming method according to any one of claims 1 to 5, wherein
the liquid further comprises a second organic solvent having a solubility parameter of 12.0 or more and 20.0 or less,
after the blowing and before the drying, a residual amount of the first organic solvent is 0.01 mL/m² or more and 0.15 mL/m² or less, and
after the blowing and before the drying, a sum of the residual amount of the first organic solvent and a residual amount of the second organic solvent is 0.01 mL/m² or more and 1.70 mL/m² or less.

7. The image forming method according to any one of claims 1 to 6, wherein the liquid further comprises a color material.

8. The image forming method according to any one of claims 1 to 7, further comprising selectively heating the medium (2) at the first temperature or higher after the drying.

9. An image forming apparatus (10) comprising:
an applier (30) configured to apply a liquid to a coating layer (M) of a medium (2) that comprises a thermosensitive layer (L) and the coating layer (M) disposed on the thermosensitive layer (L), wherein the thermosensitive layer (L) comprises a color developer (P) and a leuco dye (Q) that reacts with the color developer (P) at a first temperature or higher, the coating layer (M) comprises a polymer (R), and the liquid comprises a first organic solvent and resin particles;
a blower (40) configured to blow a gas at a second temperature to a surface of the medium (2) where the liquid has been applied; and
a dryer (50) configured to dry the medium (2) to which the gas has been blown by the blower (40) at a third temperature,
wherein
a solubility parameter of the first organic solvent is 9.0 or more and less than 12.0, and
a following relationship is satisfied: the second temperature < a minimum film-forming temperature of the resin particles in the liquid < the third temperature < the first temperature.
